# EUROPÄISCHE PATENTSCHRIFT

(11) **EP 3 255 647 B1**
(45) Veröffentlichungstag und Bekanntmachung des Hinweises auf die Patenterteilung: **30.10.2019**
(21) Anmeldenummer: 17176633.0
(22) Anmeldetag: 05.12.2014
(51) Int. Cl.: H01H 37/04, B23K 26/20

(54) **THERMISCH LEITENDER; VORZUGSWEISE PLATTENFÖRMIGER TRÄGER SOWIE LASERSCHWEISSVERBINDUNG**
THERMALLY CONDUCTIVE; PREFERABLY DISC SHAPED SUPPORT AND LASER WELD JOINT
SUPPORT THERMOCONDUCTEUR, DE PRÉFÉRENCE EN FORME DE PLAQUE ET ASSEMBLAGE SOUDÉ AU LASER

(30) Priorität: 06.12.2013 DE 102013113650
(43) Veröffentlichungstag der Anmeldung: 13.12.2017
(62) Teilanmeldung aus: 14812169.2
(73) Patentinhaber: Inter Control Hermann Köhler Elektrik GmbH & Co. KG, 90411 Nürnberg (DE)
(72) Erfinder: MARTIN, Andreas, 90542 Eckental (DE); ZIMMERMANN, Frédéric, 90482 Nürnberg (DE); SCHMID, Alois, 91088 Bubenreuth (DE); HAMM, Wolfgang, 75015 Bretten (DE)
(74) Vertreter: Stippl, Hubert

(56) Entgegenhaltungen:
- EP-A1- 1 249 851
- JP-A- S63 130 290
- US-A1- 2012 055 909
- US-A1- 2013 157 113
- L. Quintino ET AL: "Laser Welding of Structural Aluminium" In: "Structural Connections for Lightweight Metallic Structures", 26. Mai 2011 (2011-05-26), Springer Berlin Heidelberg, Berlin, Heidelberg, XP055192465, ISSN: 1869-8433 ISBN: 978-3-64-218187-0 Bd. 8, Seiten 33-57, DOI: 10.1007/8611_2010_46, * Seite 50 - Seite 54; Abbildung 2 *

## Beschreibung

Die vorliegende Erfindung betrifft einen thermisch leitender plattenförmigen Träger nach dem Oberbegriff des Anspruchs 1 sowie eine Anordnung, die einen solchen Träger umfasst.

### Technologischer Hintergrund

Bei thermischen Schalteinrichtungen der vorstehend interessierenden Art handelt es sich insbesondere um Temperaturregler, Temperaturbegrenzer, Temperaturwächter oder Temperatursicherungen, die jeweils mit der Heizeinrichtung eines Gebrauchsgegenstands in Wärmekontakt stehen und bei Überschreiten eines vorgegebenen Temperaturschwellwerts selbsttätig einen Schaltvorgang ausführen. Vor allem werden derartige thermische Schalteinrichtungen üblicherweise bei Gebrauchsgegenständen, wie z.B. Wasserkocher, Durchlauferhitzer, Kaffeemaschinen, Waschmaschinen, Bügeleisen und dergleichen verwendet.

Bei Temperaturreglern dient als Temperaturfühler hierbei üblicherweise eine Bimetallschnappscheibe, die temperaturabhängig zwei stabile Schnappstellungen (Durchbiegungen) einnimmt (bistabile Bimetallschnappscheibe) und abhängig von ihrer jeweiligen Durchbiegung ein Stromkreis geöffnet oder wieder geschlossen wird. Bei einer Temperatursicherung ist anstelle der Bimetallschnappscheibe eine Schmelzeinrichtung z. B. Schmelzpille vorgesehen, mittels der bei Überschreiten einer Temperatur ein Stromkreis unterbrochen werden kann.

Eine entsprechende thermische Schalteinrichtung in Form eines thermischen Temperaturreglers sowie einer thermischen Temperatursicherung ist beispielsweise aus der DE 197 06 316 C2 ersichtlich.

Derartige Schalteinrichtungen werden üblicherweise unmittelbar an der Heizeinrichtung wie z.B. eines Wasserrohrs, eines Wärmespeichers oder dgl. des betreffenden Gebrauchsgegenstandes in Wärmekontakt befestigt. Hierzu umfasst die thermische Schalteinrichtung einen thermisch leitenden, vorzugsweise plattenförmigen Träger, auf dem sich das Gehäuse bzw. der Sockel der thermischen Schalteinrichtung befindet und der gleichzeitig zur Befestigung an der Oberfläche der Heizeinrichtung dient. Zur Befestigung des plattenförmigen Trägers weist dieser üblicherweise mindestens eine, vorzugsweise zwei sich gegenüberstehende Befestigungslaschen mit je einer Bohrung auf. Eine entsprechende Trägerplatte ist beispielsweise aus der DE 20 2005 019 880 U1 bekannt. Die thermische Schalteinrichtung wird z.B. an einem an der Heizeinrichtung vorinstallierten Gewindebolzen mittels einer Schraubenmutter befestigt. Diese Befestigungsart kann lediglich manuell durchgeführt werden. Sie ist für eine Automatisierung nicht geeignet. Darüber hinaus tritt hierbei oft ein Luftspalt zwischen Trägerplatte und der Heizeinrichtung auf, der zu einem nur mäßigen Wärmeübergang und dadurch zu erhöhten Reaktionszeiten der thermischen Schalteinrichtung führt. Ferner müssen für die Aufnahme der Bohrung für den Gewindebolzen die Befestigungslaschen des Trägers ausreichend groß dimensioniert sein, was wiederum dazu führt, dass diese Befestigungsart einen erhöhten Platzbedarf benötigt. Hinzu kommt, dass Heizeinrichtungen für Gebrauchsgegenstände sowie auch der Träger thermischer Schalteinrichtungen oftmals aus Aluminium bestehen.

### Druckschriftlicher Stand der Technik

Die US 2012/055909 A1 betrifft ein Laserschweißverfahren sowie ein Verfahren zur Herstellung von Batterien. Hierbei wird ein elektrischer Leiter mit Nietabschnitt an einem elektrischen Außenkontakt der Batterie im Laserschweißverfahren befestigt. Der Nietabschnitt besitzt Zylinderform mit einem sich radial nach außen erstreckenden Kopfbereich, an dem sich die Schweißpunkte gesetzt werden.

Die US 2013/157113 offenbart ein Batteriemodul, welches aus einer Vielzahl einzelner Batteriezellen aufgebaut ist. An der Oberseite der Batteriezellen sind jeweils zugehörige externe Anschlüsse vorgesehen, wobei benachbarte Anschlüsse jeweils mittels einer Sammelschiene miteinander elektrisch verbunden sind. Die Sammelschiene kann eine unterschiedliche Kantenausgestaltung aufweisen, um entlang dieser Kanten eine Laserschweißung vornehmen zu können. Jede der Sammelschienen umfasst Bohrungen, durch die hindurch Messleitungen für Temperatur und Spannung verlaufen.

Die EP 1 249 851 A1 zeigt eine thermische Schalteinrichtung, deren Gehäuse mittels Schrauben mit einem Befestigungsrahmen verbunden sind. Der Befestigungsrahmen wiederum weist drei jeweils abgewinkelte Befestigungslaschen auf, sodass der Befestigungsrahmen vorab an der Oberfläche eines Heizungselements mittels Laserschweißen befestigt werden kann. Die Anschlusskontakte des thermischen Schaltelements sind am Gehäuse parallel zueinander angeordnet und stehen in keiner Relation zur Position der Befestigungslaschen.

Die JP S63 130290 beschreibt ein Verfahren zum Schweißen mit geringer Energie, bei dem ein dünner Überlappungsbereich eines Paares von zu schweißenden Basismetallen gebildet wird, indem diese aufeinander gestapelt werden. Anschließend wird ein Energiestrahl auf diesen dünnen Teil projiziert.

Eine thermische Schalteinrichtung ist aus der DE 198 52 883 C1 bekannt. Die dort beschriebene thermische Schalteinrichtung wird an deren quer zu den Anschlusskontakten orientierten Befestigungslaschen mittels Laser unmittelbar auf der Oberfläche des Wasserrohrs eines Durchlauferhitzers angeschweißt. Derartige Bauteile sind ständigen Temperaturschwankungen und damit Materialspannungen ausgesetzt. Eine Rissbildung darf deswegen bei dem Laserschweißvorgang nicht eintreten. Zur Befestigung mittels Laserschweißen muss bei der bekannten Schalteinrichtung sowohl an den Befestigungslaschen der Trägerplatte als auch an der Auflageflächen auf dem Wasserrohr jeweils eine Vorprägung vorgenommen werden. Hierdurch wird ein beträchtlicher Bearbeitungsaufwand erforderlich. Hinzu kommt, dass Heizeinrichtungen für Gebrauchsgegenstände sowie auch der Träger thermischer Schalteinrichtungen oftmals aus Aluminium bestehen, was die Befestigung durch Laserschweißen aufgrund der schwierigen Schweißbarkeit von Aluminium wegen des engen Schmelzbereichs sowie der Bildung von Oxidschichten erschwert. Es kommt häufig beim Laserschweißen zu einer Rissbildung, woraus die Gefahr resultiert, dass sich die thermische Schalteinrichtung löst und mangels ausreichendem Wärmeübertritt ihre Funktion nicht mehr ausüben kann.

### Aufgabe der vorliegenden Erfindung

Die Aufgabe der vorliegenden Erfindung besteht darin, einen neuartigen Träger der eingangs genannten Art zur Verfügung zu stellen, mit dem eine Verbesserung der Befestigungsqualität bei gleichzeitiger Möglichkeit einer Automatisierung erzielt werden kann.

### Lösung der Aufgabe

Die vorstehende Aufgabe wird bei dem Träger nach Anspruch 1 oder 13 gelöst. Besondere Ausgestaltungen der Erfindung werden in den Unteransprüchen beansprucht.

Mit dem erfindungsgemäßen plattenförmige Träger kann eine deutliche Reduzierung der Rissbildung und damit eine wirksame und auch reproduzierbare, wesentliche Verbesserung der Befestigungsqualität erreicht werden, ohne dass eine Prägung zur Erzeugung einer Krümmung oder Wölbung an der jeweiligen Befestigungslasche und der Oberfläche der Heizeinrichtung vorgenommen werden muss. Der plattenförmige Träger ist an seiner Unterseite eben ausgebildet, und kann daher plan auf der Oberfläche der Heizeinrichtung aufliegen. Daraus resultiert im Gegensatz zu den zueinander durch Prägung gekrümmten Flächen, bei denen sich immer bearbeitungsabhängig ein gewisser Luftspalt einstellen wird, ein erheblich verbesserter Wärmeübergang im Bereich der Laserschweißlinie, aber auch über die restliche Kontaktfläche zwischen Träger und der Oberfläche der Heizeinrichtung. Dies wiederum führt bei erhöhter Befestigungssicherheit gleichzeitig zu erheblich kürzeren Reaktionszeiten der thermischen Schalteinrichtung. Die Erfindung bewirkt zudem, dass zur Herstellung der Laserschweißverbindung der Laserstrahl schräg von der Seite, beispielsweise bei einer "Abschattung" der Schweißlinie durch einen oberhalb befindlichen Anschlusskontakt, für den Schweißvorgang positioniert werden kann. Die Erfindung ermöglicht es auch, eine Befestigung einer thermischen Schalteinrichtung an einer Heizeinrichtung in einem automatisierten Prozessschritt mit reproduzierbarer Befestigungsqualität durchzuführen. Ferner ist im Vergleich zu einer Befestigungslasche mit Loch zum Anschrauben ein nur geringer Überhang der Befestigungslasche des Trägers zum Gehäuse notwendig, wodurch sehr platzsparende Anordnungen möglich werden. Dadurch, dass die Unterseite der Befestigungslasche eben ausgebildet ist, muss an der Oberfläche der Heizeinrichtung im Gegensatz zum Stand der Technik keine Bearbeitungsmaßnahme erfolgen. Der Träger liegt plan auf der Auflagefläche der Heizeinrichtung auf, wodurch ein verbesserter Wärmeübergang erzielt werden kann.

Der speziell für die Einkopplung des Laserstrahls ausgebildete Bereich ist vorzugsweise an beiden Befestigungslaschen des Trägers vorgesehen.

Aufgrund der Konturierung und/oder Strukturierung des präparierten Bereichs findet beim Auftreffen des Laserstrahls auf den Bereich des Trägers eine reduzierte Reflexion, insbesondere reduzierte Streureflexion des Laserstrahls und daraus folgend ein vermindertes Verspritzen von geschmolzenem Material statt im Vergleich zu einem Bereich des Trägers, der keine Konturierung und/oder Strukturierung aufweist.

Untersuchungen haben ergeben, dass eine nach unten, also zur Unterseite des Trägers hin orientierte Materialverjüngung, eine erheblich verbesserte Einkopplung des Laserstrahls in das Material des Trägers sowie der darunter befindlichen Heizeinrichtung ermöglicht, wodurch eine Rissbildung wirksam und reproduzierbar verhindert werden kann. Hierdurch wird eine lange Lebensdauer der Verbindung zwischen dem thermischen Schaltelement und der Heizeinrichtung erreicht.

Vorzugsweise erfolgt das Laserschweißen unter Schutzgas. Hierdurch kann die Gefahr von Rissbildung weiter reduziert werden.

Ferner besteht der Vorteil, dass durch die Materialverjüngung in Verbindung mit einem Laser mit geringerer Leistung eine spannungsreduzierte Schweißnaht in der Kontaktnaht erzeugt werden kann.

Dadurch, dass sich die verjüngende Konturierung und/oder Strukturierung der Oberfläche an einer Befestigungslasche des Trägers befindet, kann die Befestigungslasche im Vergleich zu einer Befestigungslasche für eine mechanische Montage in ihrer Länge vergleichsweise kurz ausgestaltet sein, wodurch sich Platzvorteile bei der Montage ergeben.

Gemäß der Erfindung ist der für die Laserschweißung präparierte Bereich nicht nur auf den äußeren Randbereich des Trägers begrenzt, sondern kann auch in einem Durchbruch in der Fläche des Trägers oder seiner Befestigungslaschen vorgesehen sein. Bei einem Durchbruch kann er beispielsweise zwischen einer Befestigung mittels Laserschweißen und einer Befestigung mittels eines Bolzens gewählt werden. Die Kantenabschrägung kann in einfacher Weise durch einen Prägevorgang vorgenommen werden, nachdem der Träger aus dem plattenförmigen Ausgangsmaterial ausgestanzt worden ist. Vorzugsweise befindet sich die Kantenabschrägung lediglich im stirnseitigen Bereich der jeweiligen Befestigungslasche. Die Kantenabschrägung kann einen beliebigen Winkel aufweisen. Vorzugsweise liegt der Winkel der Kantenabschrägung in einem Bereich von 25° bis 75°.

Je nach Bedarf kann die verjüngende Konturierung auch gerundet sein, wobei die Rundung konkav oder konvex ausgebildet sein kann.

Auch können bei der Kantenabschrägung die jeweiligen verbleibenden Kanten gerundet oder abgeflacht sein. Die Kantenabschrägung kann sich auch nur über einen Teilbereich der Dicke des Trägers erstrecken.

Dadurch, dass im Bereich der verjüngenden Konturierung zusätzlich eine Oberflächenprofilierung vorgesehen ist, wird, insbesondere bei der Verwendung von Laser mit einer höheren Leistung, eine bessere Einkopplung des Laserstrahls erreicht und hiermit gleichzeitig die Ausbildung von Schweißspritzern reduziert.

Je nach Bedarf kann als Oberflächenprofilierung eine Oberflächenstruktur bestehend aus einer Vielzahl von Rillen, Noppen, Pyramiden, Zacken, Vertiefungen, Wellen usw. vorgesehen sein. Auch eine Aufrauung kann als Oberflächenprofilierung zum Einsatz kommen.

Wenn die Ausrichtung der Anschlusskontakte im Gehäuse, d.h. deren gedankliche Verbindungslinie, und die Orientierung der gedanklichen Verbindungslinie des jeweiligen für die Laserschweißung präparierten Bereichs gleich sind, was beispielsweise der Fall ist, wenn die Laserschweißung im Abschattungsbereich des jeweiligen Anschlusskontakts vorgenommen werden muss, kann aufgrund der Erfindung eine besonders wirksame Verbindung zwischen dem Träger und dem Untergrund mittels Laserschweißung hergestellt werden.

Zweckmäßigerweise eignet sich die erfindungsgemäße Schalteinrichtung ganz besonders für den Fall, wenn der Träger bzw. die Befestigungslaschen desselben aus Aluminium oder einer Aluminiumlegierung bestehen. Denn eine Vielzahl von Heizeinrichtungen in Gebrauchsgegenständen bestehen aufgrund des geringen Gewichts sowie der guten Wärmeübertragungseigenschaft aus Aluminium oder einer Aluminiumlegierung.

Am Träger kann ein Schweißzusatz untergebracht sein. Bei dem Schweißzusatz handelt es sich vorzugsweise um ein siliziumhaltiges Aluminium oder um eine siliziumhaltige Aluminiumlegierung, jeweils mit einem Si-Gehalt von mehr als 3 Gew.-%. Der Vorteil dieser Ausgestaltung der Erfindung besteht darin, dass neben der Qualitätsverbesserung der Schweißverbindung ein entsprechend bereits vorpräparierter Träger dem Schweißvorgang zugeführt werden kann, insbesondere auch im Zuge eines automatisierten Prozesses. Vorzugsweise ist der Schweißzusatz am Träger befestigt, so dass eine (auch automatisiert) handhabbare Einheit bestehend aus thermischer Schalteinrichtung und Schweißzusatz vorliegt. Eine Zuführeinrichtung für den Schweißzusatz kann hierbei entfallen.

Zweckmäßigerweise kann der Schweißzusatz in einer Einbuchtung oder Aufnahme am Träger untergebracht oder am oder auf den Träger aufgepresst sein.

Zweckmäßigerweise befindet sich der Schweißzusatz an einer oder zumindest im Bereich einer Kante des Trägers bzw. der Befestigungslasche.

Der Schweißzusatz kann drahtförmig oder schichtförmig sein. Der drahtförmige Schweißzusatz hat den Vorteil, dass er in einfacher Weise in Einbuchtungen oder Ausnehmungen am Träger unterbracht werden kann. Der schichtförmige Schweißzusatz kann entweder auf die Unterseite des Trägers aufgepresst oder auch um die Stirnseite des Trägers herumgeformt sein. Der schichtförmige Schweißzusatz kann vorteilhaft auch schon am Ausgangsmaterial zur Herstellung des Trägers angeformt (z. B. platiert, angeschweißt oder angedrückt) sein.

Zweckmäßigerweise kann aufgrund der erfindungsgemäßen Ausbildung des Trägers der Laserstrahl schräg von oben auf den für die Laserschweißung speziell präparierten Bereich des Trägers auftreffen. Dies ermöglicht es, insbesondere im Abschattungsbereich der Anschlusskontakte befindliche Stellen des Trägers bzw. seiner Befestigungslaschen rissfrei zu schweißen. Ebenso wird hierbei ermöglicht, dass lediglich zum Gehäuse gering überstehende Befestigungslaschen verwendet werden können. Sogar auch bei Ausgestaltungen des Trägers, bei denen keine Befestigungslaschen vorgesehen sind, kann hierdurch eine rissfreie Schweißung vorgenommen werden.

Es kann ein Laser mit einer nur geringeren Wellenlänge eingesetzt werden. Vorzugsweise können Laser mit einer Wellenlänge im Bereich von 400 - 1200 nm, vorzugsweise im Bereich von 400 - 750 nm eingesetzt werden. Dies hat den Vorteil, dass die Energie besser in das Material eingekoppelt werden kann, da die durch den Laser eingebrachte Energie von dem Material besser absorbiert wird. Daraus resultiert wiederum, dass eine geringere Leistung des Laserstrahls erforderlich ist. Es genügen Laserstrahlen mit einer Leistung ab ca. 50 Watt. Sogenannte "grüne Laser" liegen in diesem Leistungsbereich. Zusätzlich ergibt sich hierdurch der Vorteil, dass sich eine geringere Erhitzung des thermischen Schaltelements während des Schweißvorgangs einstellt. Vor allem beim Aufschweißen einer thermischen Sicherung auf eine Heizeinrichtung besteht das Problem, dass aufgrund eines erhöhten Hitzeeintrags unbeabsichtigt die Schmelzpille der Sicherung ausgelöst werden kann, wodurch das thermische Schaltelement zerstört wird.

Zweckmäßigerweise kann mit dem Laser mit der Wellenlänge im Bereich von 400 - 1200 nm, vorzugsweise 400 - 750 nm, auch eine Vorwärmung bzw. Vorinitialisierung des für die Schweißung präparierten Bereichs stattfinden. Dadurch kann der mit der Oberflächen-Konturierung und/oder -Strukturierung versehene Bereich von einer Oberflächenoxidschicht befreit werden. Anschließend kann aufgrund der Vorwärmung oder Initialisierung vorzugsweise mit einem Laser höherer Wellenlänge oder höheren Leistung geschweißt werden.

Alternativ kann ein Laser mit einer geringeren Wellenlänge (z. B. ein grüner Laser) mit einem Laser mit größerer Wellenlänge gleichzeitig zum Einsatz kommen. Der Einsatz eines bifokalen Lasers, d.h. eines Lasers mit zwei Brennpunkten zur Erzeugung eines fokussierten Laserstrahls sowie eines nicht fokussierten Laserstrahls dient, einerseits dazu, den Randbereich der Schweißnaht zu erwärmen sowie andererseits die Schweißung selbst durchzuführen. Auch hierdurch kann die Bildung von Rissen zusätzlich reduziert werden.

Durch die Verwendung von Schweißzusätzen kann das Schmelzverhalten des zu schweißenden Materials optimiert werden. Vorzugsweise erfolgt das Laserschweißen unter Schutzgas. Hierdurch kann die Gefahr von Rissbildung weiter reduziert werden.

Vorzugsweise ist die Einstrahlrichtung des Laserstrahls bezogen auf die Schräge (verjüngende Konturierung) senkrecht orientiert.

Alternativ kann die Einstrahlrichtung des Laserstrahls bezogen auf die Schräge (verjüngende Konturierung) auch nach oben oder nach unten gekippt orientiert sein, besonders vorzugsweise um einen Kippwinkel bis zu ±20°.

Alternativ oder zusätzlich kann die Einstrahlrichtung des Laserstrahls bezogen auf die Schräge (verjüngende Konturierung) auch seitlich gekippt orientiert sein, besonders vorzugsweise um einen Kippwinkel bis zu ±20°.

### Beschreibung der Erfindung anhand von Ausführungsbeispielen

Zweckmäßige Ausgestaltungen der vorliegenden Erfindung werden nachstehend näher erläutert. Gleichbleibende Merkmale werden der Übersichtlichkeit halber lediglich einmal in den Zeichnungen wiedergegeben. Es zeigen:
- Fig. 1: eine zweckmäßige Ausgestaltung einer thermischen Schalteinrichtung in Form eines Temperaturreglers mit einem plattenförmigen Träger gemäß der vorliegenden Erfindung in perspektivischer Darstellung (Fig. 1A) sowie in Schnittdarstellung (Fig. 1B);
- Fig. 2: eine perspektivische Darstellung des plattenförmigen Trägers der thermischen Schalteinrichtung gemäß Fig. 1;
- Fig. 3: Lage und Ausbildung der Laserschweißnaht im Bereich der Stirnseite des plattenförmigen Trägers in perspektivischer Darstellung der Gesamtanordnung (Fig. 3A) sowie in vergrößerter, schematischer Schnittdarstellung (Fig. 3B);
- Fig. 4: unterschiedliche Ausgestaltungen der sich verjüngenden Kantenausbildung des plattenförmigen Trägers mit und ohne Oberflächenprofilierung im Bereich der Kante, jeweils in vergrößerter Detailansicht;
- Fig. 5: unterschiedliche Ausgestaltungen der jeweiligen Befestigungslasche des plattenförmigen Trägers zur Befestigung des plattenförmigen Trägers mittels Laserschweißen in perspektivischer Ansicht;
- Fig. 6: weitere Ausgestaltungen von Befestigungslaschen mit Oberflächenstrukturierung, aber mit gleichbleibender Schichtdicke im Bereich der Befestigungslaschen, in perspektivischer Ansicht; Diese Ausgestaltungen handeln sich nicht um Ausführungsformen der Erfindung, sondern um Beispiele, die das Verständnis der Erfindung erleichtern;
- Fig. 7: weitere Ausgestaltungen eines Temperaturreglers mit einer andersartigen nicht zur Erfindung gehörigen Ausgestaltung des plattenförmigen Trägers gemäß der vorliegenden Erfindung in perspektivischer Ansicht (Fig. 7A), in Schnittdarstellung (Fig. 7B) sowie als Variante mit außen umlaufenden Segmenten für die Laserschweißung (Fig. 7C);
- Fig. 8: unterschiedliche Ausgestaltungen im Bereich der jeweiligen Befestigungslasche des plattenförmigen Trägers mit Schweißzusatz jeweils in vereinfachter Teilschnittdarstellung;

- Fig. 9: eine Befestigung eines Temperaturreglers mittels einer Laserschweißnaht an der Trennnaht der flächenbündigen Ebene zwischen Träger und unterseitiger Heizeinrichtung.

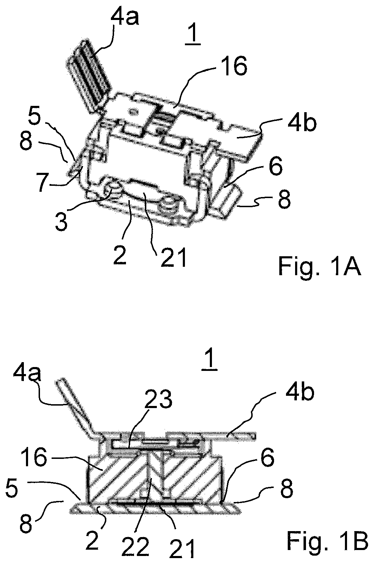

Die Bezugsziffer 1 in Fig. 1A bezeichnet eine zweckmäßige Ausgestaltung einer thermischen Schalteinrichtung in Form eines Temperaturreglers. Der Temperaturregler umfasst ein vorzugsweise aus Keramik bestehendes Gehäuse 16 (auch "Sockel" genannt), welches auf einem plattenförmigen Träger 2 aufliegt. Der Träger 2 besteht aus einem wärmeleitfähigen Material, insbesondere aus Metall, vorzugsweise aus Aluminium. Er umfasst jeweils einen Befestigungsarm 7 in jedem Eckbereich des Trägers 2, welcher jeweils an einer außenseitigen Ausnehmung des Gehäuses 16 angreift und beide Teile zueinander in Position hält.

Für einen Anschluss des Temperaturreglers 1 in einen (nicht dargestellten) elektrischen Stromkreis befinden sich an der Oberseite desselben zwei Anschlusskontakte 4a, 4b. Unterseitig besitzt das Gehäuse eine Ausnehmung. Im Bereich dieser Ausnehmung liegt eine Bimetallscheibe 21 auf der Oberseite des Trägers 2 auf und wird randseitig von umfänglich angeordneten Vorsprüngen 3 in Position gehalten. Die Bimetallscheibe nimmt temperaturabhängig zwei stabile Positionen ein (bistabile Bimetallschnappscheibe). Die beiden Positionen werden mittels eines mechanischen Abtastteils z. B. in Form eines vertikal angeordneten Stifts 22 abgetastet und auf eine im oberen Bereich des Gehäuses 16 angeordnete Kontaktfeder 23 übertragen. In einer ersten stabilen Position der Bimetallscheibe 21 wird der Stift 22 nach oben hin zur Kontaktfeder 23 gedrückt und hierdurch der elektrische Kontakt zwischen den beiden Anschlusskontakten 4a, 4b geschlossen gehalten. Die Kontaktfeder 23 ist beispielsweise mit dem in Fig. 1B linken Anschlusskontakt 4a fest verbunden. Der in Fig. 1B rechte Anschlusskontakt 4b wird beispielsweise lediglich durch die durch die Bimetallscheibe 21 sowie den Stift 22 bedingte Anpresskraft in Schließposition gehalten. Sobald sich die Bimetallscheibe 21 aufgrund des Über- bzw. Unterschreitens eines Temperaturschwellwerts in ihre zweite (z. B. tiefer liegende) stabile Position (zweite Schnappposition) bewegt, bewegt sich der Stift 22 z. B. aufgrund der Vorspannung der Kontaktfeder 23 sowie der Schwerkraft nach unten. Der elektrische Kontakt wird hierdurch im Bereich des in Fig. 1B rechten Anschlusskontakts 4b geöffnet.

Der in Fig. 1 dargestellte Temperaturregler ist dazu vorgesehen, direkt auf der Oberfläche einer (in Fig. 1 nicht dargestellten) Heizeinrichtung oder einer dazwischen befindlichen, mit der Heizeinrichtung verbundenen Befestigungsplatte mittels Laserschweißung in Wärmekontakt befestigt zu werden. Hierzu umfasst der Träger 2 mindestens einen, vorzugsweise zwei, sich gegenüberliegende Bereiche 8, an denen eine Laserschweißung vorgenommen werden soll und die eigens für die Laserschweißung eine Formpräparation erfahren haben. Hierzu verfügt der Träger 2 vorzugsweise über eine außenseitig am Gehäuse 16 jeweils vorstehende Befestigungslasche 5, 6 mit je einer für die Laserschweißung speziell vorgesehenen Kantenausbildung, die bei der in Fig. 1 dargestellten Ausführungsform vorzugsweise abgeschrägt, also angefast ist. Der Fasenwinkel ist beliebig, vorzugsweise liegt er im Bereich von 25° bis 75°.

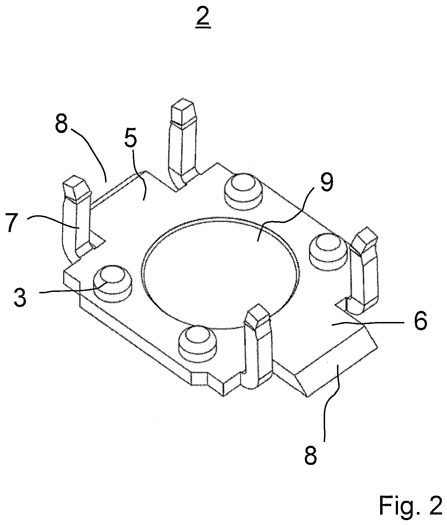

Noch deutlicher ersichtlich ist diese Kantenausbildung der jeweiligen Befestigungslasche 5 bzw. 6 des Trägers 2 aus der Darstellung gemäß Fig. 2. Dementsprechend ist im Bereich der Stirnseite der jeweiligen Befestigungslasche 5, 6 eine Querschnittsverjüngung oder Materialverjüngung in Form einer nach unten auslaufenden Schrägfläche oder Fase vorgesehen. Aus Fig. 2 ist eine kreisförmige Ausnehmung 9 ersichtlich, die dazu dient, dass sich die Bimetallscheibe 21 auch nach unten frei bewegen kann.

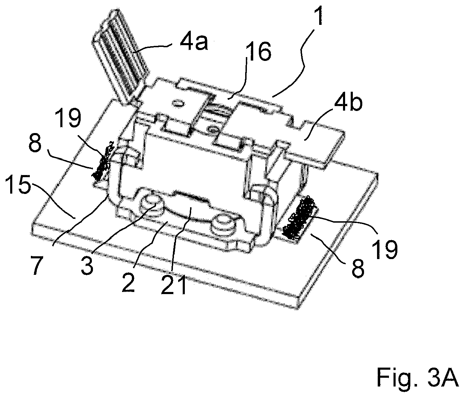

Fig. 3A zeigt die Anordnung des Temperaturreglers 1 auf der Oberseite einer Heizeinrichtung 15 nach vollendeter Laserschweißung. Hierbei befinden sich, vgl. auch Fig. 1 sowie 2, die Bereiche 8 zur Herstellung der Laserschweißung in Längsrichtung des Gehäuses 16, was den Vorteil hat, dass keine Schweißspritzer aufgrund des in diesem Bereich geschlossenen Gehäuses 16 in das Innere des Temperaturreglers 1, also zur Bimetallscheibe 21 hin, gelangen können. Mit der Bezugsziffer 19 ist die jeweilige längliche Schweißnaht oder auch Schweißraupe gekennzeichnet. Sie verläuft lediglich entlang des für die Schweißung in Bezug auf seine Form speziell präparierten Bereichs 8 des Trägers 2.

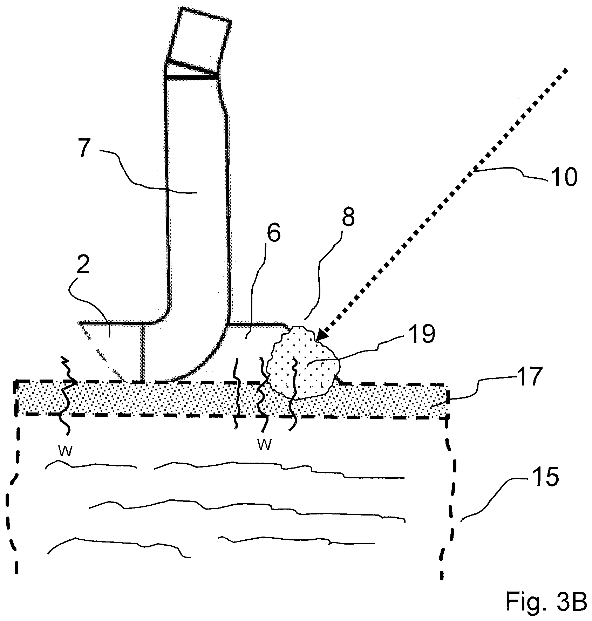

Fig. 3B zeigt in vergrößerter prinzipieller Darstellung die homogene Ausbildung der Laserschweißnaht 19 im Bereich 8, also im Bereich der abgeschrägten Stirnseite des plattenförmigen Trägers 2. Der plattenförmige Träger 2 liegt plan auf der Außenseite der Wand 17 der beispielsweise Heißwasser enthaltenden Heizeinrichtung 15 auf. Im Bereich der Schräge an der vorderen Stirnseite der Befestigungslasche 6 des Trägers 2 wird ein homogener, durch den Laserstrahl 10 bedingter Aufschmelzbereich sowohl im Träger 2 als auch in der Wand 17 der Heizeinrichtung 15 erzeugt. Dies führt zu einer erheblichen Verminderung der Gefahr einer Rissbildung in diesen Bereichen und gleichzeitig damit zu einer beträchtlichen Verbesserung der Güte der Laserschweißverbindung. Vorzugsweise erfolgt das Laserschweißen unter Schutzgas. Hierdurch kann die Gefahr von Rissbildung weiter reduziert werden.

Dadurch, dass der Träger 2 bzw. die Befestigungslasche 5 bzw. 6 des Trägers 2 plan auf der Oberseite der Wand 17 der Heizeinrichtung 15 aufliegt und keine Bearbeitung der Oberflächen im Kontaktbereich nötig sind, tritt ein verbesserter Wärmeübergang W sowohl im innenseitigen Bereich des Trägers 2 wie auch im Bereich der Schweißnaht 19 auf und führt daher zu besonders niedrigen Reaktionszeiten des thermischen Schaltelements.

Die Verjüngung der Kante des Trägers 2 bzw. der Befestigungslasche 6 im Bereich 8 beispielsweise in Form einer Kantenabschrägung, wie in Fig. 3 dargestellt, führt dazu, dass ein Laser mit weniger Energie als üblich verwendet werden kann. Übliche Laser für das Laserschweißen (z.B. Nd:YAG-Laser oder CO2-Laser) besitzen eine Wellenlänge von 1064 nm. Vorliegend können aufgrund der Präparierung des Trägers 2 zur Herstellung einer Schweißverbindung ohne Rissbildung zweckmäßigerweise Laser mit weniger Energie eingesetzt werden, beispielsweise sogenannte "grüne Laser" mit eine Wellenlänge von nur 532 nm. Hierdurch ist der Energieeintrag durch den Laserstrahl 10 erheblich niedriger, wobei sich gleichzeitig bedingt durch die Konturierung der Kante des Trägers 2 eine Laserschweißnaht 19 ohne Rissbildung einstellt. Vorzugsweise können auch sogenannte bifokale Laser eingesetzt werden.

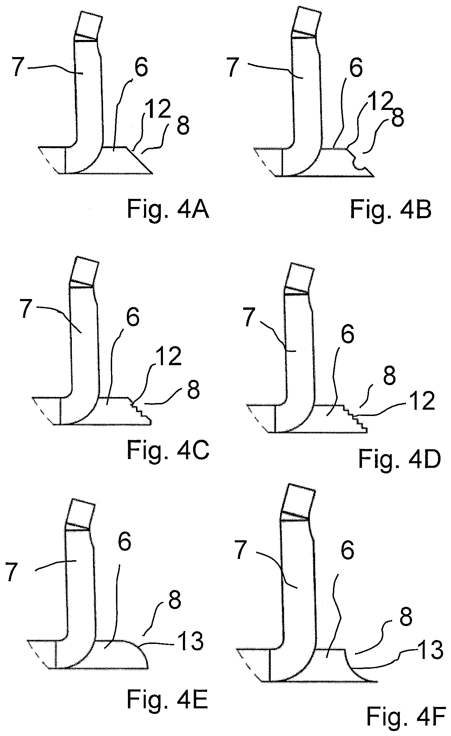

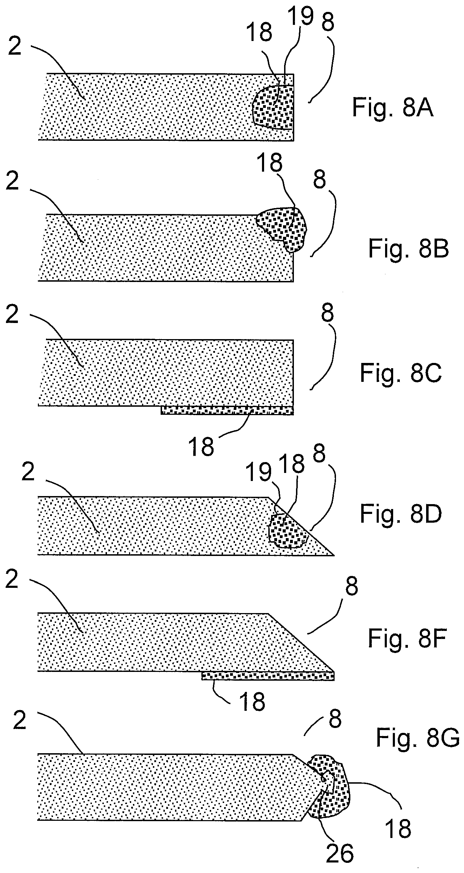

Wie in den Fig. 4A - Fig. 4F dargestellt, können die stirnseitigen Konturierungen des Bereichs 8 für die Laserschweißung unterschiedlich ausgebildet sein. Fig. 4A zeigt eine stirnseitige Kantenabschrägung 12 der Kante der Befestigungslasche 6. Bei der Ausgestaltung nach Fig. 4B ist in der Kantenabschrägung 12 im Bereich 8 noch eine zusätzliche, die Oberfläche vergrößernde Ausnehmung vorgesehen. Diese kann beispielsweise auch dazu verwendet werden, um darin eine Schweißhilfe, beispielsweise in Form eines Schweißdrahtes unterzubringen (vergleiche auch Fig. 8D).

Gemäß den Ausgestaltungen nach Fig. 4C sowie Fig. 4D kann die Kantenabschrägung 12 zusätzlich auch mit einer Oberflächenprofilierung ausgestaltet sein, um eine noch bessere Einkopplung des Laserstrahls zu erzielen sowie Reflexionen desselben und daraus resultierende Schmelzspritzer weitgehend zu vermeiden.

Anstelle einer Abschrägung der Vorderkante des Bereichs 8 kann auch eine Kantenabrundung 13, z. B. wie sie in Fig. 4E dargestellt ist, oder eine nach innen gerichtete Kantenabrundung in Form einer leicht konkaven Krümmung vorgesehen sein.

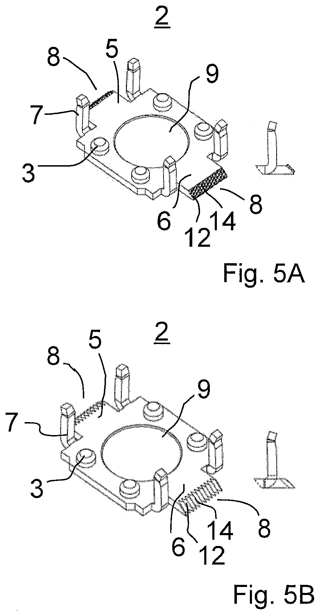

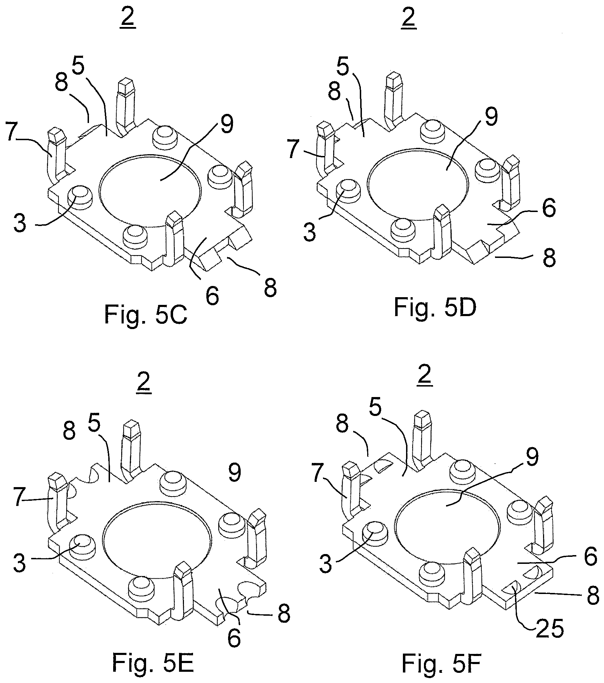

Die Darstellungen gem. Fig. 5A und 5B zeigen in perspektivischer Ansicht eine neben der Querschnittsreduzierung durch Kantenabschrägung 12 zusätzlich vorgenommene Oberflächenprofilierung 14, insbesondere Oberflächen-Aufrauung oder Oberflächen-Riffelung oder -schlitzung, des für die Laserschweißung vorgesehenen Bereichs 8.

Es ist nicht unbedingt erforderlich, den gesamten stirnseitigen Bereich des für die Laserschweißung vorgesehenen Bereichs 8 gleichförmig auszubilden. Wie aus den Fig. 5C - Fig. 5F hervorgeht, können entlang der Breite des Bereichs 8 lediglich Teilbereiche für die Laserschweißung entsprechend formkonfiguriert sein. Bei den genannten Ausgestaltungen sind jeweils zwei Bereiche nebeneinander für die Laserschweißung vorgesehen. Auch müssen die Bereiche des sich verjüngenden Querschnittes nicht nur an der Außenkante vorgesehen sein, sondern können vielmehr, wie dies in Fig. 5D dargestellt ist, auch innerhalb der Außenkante der Befestigungslasche 5 bzw. 6 angebracht sein. Auch in diesen Fällen kann durch Verwendung eines insbesondere leistungsschwächeren Lasers eine wirkungsvolle und rissfreie Schweißverbindung des Trägers 2 mit dem Untergrund hergestellt werden.

Bei der Ausgestaltung nach Fig. 5F liegt die Schrägfläche im Innenbereich der jeweiligen Befestigungslasche 5, 6. Die hierdurch gebildete Ausnehmung 25 kann zudem zur Unterbringung eines Schweißzusatzes genutzt werden.

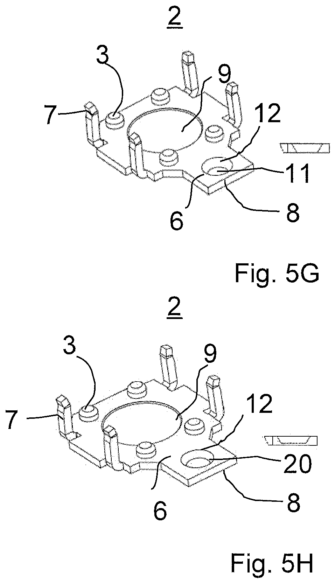

Bei der Ausgestaltung nach Fig. 5G ist die Materialverjüngung im Bereich des Außenumfangs eines Durchbruchs 11 vorgesehen, so dass eine Verbindung durch eine ringförmige Schweißlinie im Bereich der Materialverjüngung des Durchbruchs 11 vorgenommen werden kann. Alternativ kann diese Ausgestaltung aufgrund des Durchbruchs 11 notfalls auch mittels einer Schraube oder eines Bolzens befestigt werden.

Eine Laserschweißung kann auch dann durchgeführt werden, wenn statt des Durchbruchs 11 lediglich eine Vertiefung 20 vorliegt, wie dies in Fig. 5H dargestellt ist. Auch hier ist eine Kantenabschrägung 12 vorgesehen, entlang der eine ringförmige Laserschweißnaht mit einem Laser von vergleichsweise niedriger Energie vorgenommen werden kann. Auch hier kann die Vertiefung 20 zudem zur Unterbringung eines Schweißzusatzes genutzt werden.

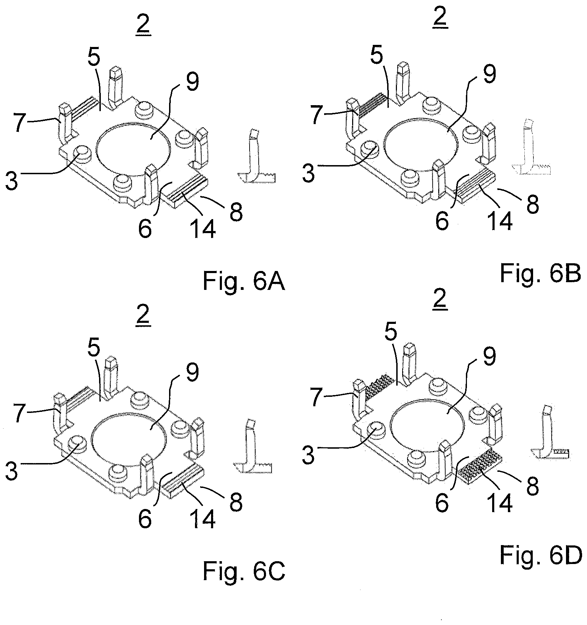

Die in den Fig. 6A bis 6D dargestellten Ausgestaltungen der einzelnen Träger 2 besitzen im Bereich ihrer Befestigungslaschen 5, 6 lediglich unterschiedliche Strukturierungen der Oberfläche des Trägers ohne einer verjüngenden Konturierung. Die Ausgestaltungen der Fig. 6A-6C zeigen über die gesamte Breite quer verlaufende Rillen in unterschiedlicher Breite und Häufigkeit bzw. Oberflächenausprägung. Die Rillen der Ausgestaltungen gemäß Fig. 6A und 6B sind im oberen Bereich scharfkantig, wohingegen bei der Ausgestaltung nach Fig. 6C die zwischen den Rillen befindlichen Bereiche nach oben hin abgerundet sind. Bei der Ausgestaltung nach Fig. 6D sind eine Vielzahl einzelner pyramidaler Formen vorgesehen. Diese Ausgestaltungen haben den Vorteil, dass sie herstellungstechnisch einfach zu realisieren sind, eine verjüngende Kantenkonturierung hierbei entfällt. Nichtsdestotrotz ermöglicht es die Strukturierung der Oberfläche, eine verbesserte Laserschweißverbindung vorzunehmen.

Zusätzlich kann auch noch eine Anschwärzung der Oberfläche mit Hilfe eines Beschriftungslasers vorgenommen werden. Hierdurch koppelt der Laserstrahl noch besser ein.

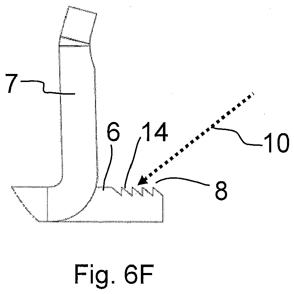

Besonders vorteilhaft ist es, wenn die durch die Oberflächenprofilierung 14 geschaffenen Flächen des Trägers 2 bzw. der jeweiligen Befestigungslasche 5, 6, wie dies beispielhaft in Fig. 6F dargestellt ist, von der oberseitigen Ebene des Trägers betrachtet zu einem schräg eintreffenden Laserstrahl 10 hin orientiert sind. Die Oberflächenstrukturierung besitzt somit eine bei schrägem Auftreffen des Laserstrahls 10 wirksame Vorzugsorientierung.

Die besondere Ausgestaltung des für die Laserschweißung vorgesehenen Bereichs 8 des Trägers 2 gemäß der vorstehenden Ausführungen kann in einfacher Weise durch einen Prägevorgang hergestellt werden.

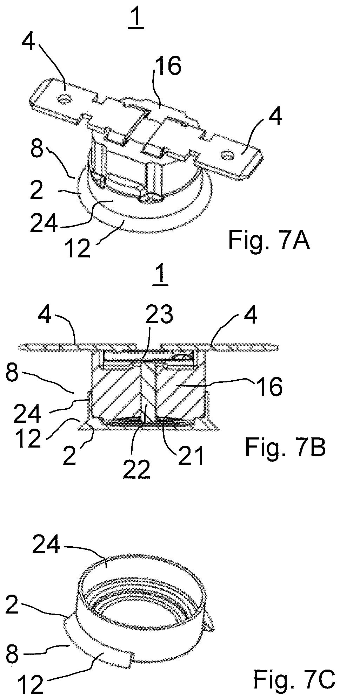

Die Fig. 7A und 7B zeigen eine Ausgestaltung einer thermischen Schalteinrichtung 1 in Form eines Temperaturreglers mit einem runden, topfförmigen Träger 2, welche umfänglich eine empor stehende Wandung 24 zur Aufnahme des Gehäuses 16 aufweist. Auch der hier verwendete Träger 2 kann zur Verbesserung einer Schweißverbindung mit einem Bereich 8 in Form einer außen umlaufenden sich verjüngenden Konturierung ausgestattet sein. Im Bereich dieser Konturierung können zudem zusätzlich auch Oberflächenstrukturierungen der vorher beschriebenen Art vorgesehen sein.

Fig. 7C zeigt eine alternative Ausgestaltung des runden, topfförmigen Trägers 2 mit einer lediglich in umfänglichen Teilsegmenten vorgesehenen, außen umlaufenden sich verjüngenden Konturierung bzw. Kantenabschrägung 12.

Ebenso kann der Träger 2 (wie in den Figuren nicht dargestellt) eine gleichbleibende Dicke im außen vorspringenden Bereich aufweisen und auch hier mit einer Oberflächenstrukturierung der vorher beschriebenen Art versehen sein.

Die Fig. 8A - 8G zeigen unterschiedliche Ausgestaltungen der vorliegenden Erfindung, bei denen der jeweilige Träger 2 die Befestigungslasche 5, 6 mit einem Schweißzusatz 18 zu einer handhabbaren Montageeinheit kombiniert ist. Dies kann auf verschiedene Art und Weise erfolgen. Wie bei den Ausgestaltungen der Fig. 8A sowie 8D befindet sich der Schweißzusatz 18 in einer Ausnehmung im stirnseitigen Bereich. Bei den Ausgestaltungen der Fig. 8C und 8F ist der Schweißzusatz 18 in einer Art Folie oder Schicht an der unteren, ebenen Fläche des Trägers aufgebracht. Bei der Ausgestaltung der Fig. 8B verläuft der Schweißzusatz 18 um mindestens eine Ecke des Trägers 2 herum. Bei der Ausgestaltung der Fig. 8G verläuft der Schweißzusatz 18 um einen stirnseitigen Vorsprung 26 herum. Das Anbringen der Schweißzusätze 18 erfolgt durch Anpressen. Verwendet werden können aber auch streifenförmige Schweißzusätze 18, die beispielsweise auf den Träger aufgeklebt werden. Bei einer Schweißung von Aluminiummaterial 19 handelt es sich bei dem Schweißzusatz um Aluminium mit einem relativ hohen Siliziumgehalt.

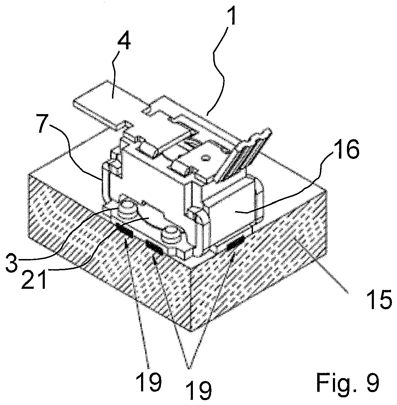

Fig. 9 zeigt die Anordnung eines Temperaturreglers 1 auf der Oberfläche einer Heizung 15 mit im flächenbündigen seitlichen Bereich durch eine Laserschweißung eingebrachten Schweißnähten 19. Eine der Schweißnaht ist stirnseitig am Temperaturregler 1 angeordnet, die beiden anderen Schweißnähte 19 befinden sich im Bereich der Seite des Trägers 2. Durch die besonderen Maßnahmen der vorliegenden Erfindung kann eine Laserschweißung somit auch im Seitenbereich des Temperaturreglers 1, nämlich dort, wo sich die Gehäuseausnehmung befindet, durchgeführt werden, ohne dass eine nachteilige Beeinträchtigung des Innenlebens des thermischen Schaltelements begründet wird.

Ausdrücklich wird hierbei darauf hingewiesen, dass statt eines Temperaturreglers oder eines Temperaturbegrenzers auch eine Temperatursicherung, die mit einer auf Hitze ansprechenden Schmelzeinrichtung z. B. in Form einer Schmelzpille vom Schutzumfang der Idee mit umfasst ist.

### Bezugszeichenliste

- 1: thermische Schalteinrichtung
- 2: Träger
- 3: Vorsprung
- 4: Anschlusskontakt
- 5: Befestigungslasche
- 6: Befestigungslasche
- 7: Befestigungsarm
- 8: Bereich
- 9: Ausnehmung (Bimetallscheibe)
- 10: Laserstrahl
- 11: Durchbruch
- 12: Kantenabschrägung
- 13: Kantenabrundung
- 14: Oberflächenprofilierung
- 15: Heizeinrichtung
- 16: Gehäuse
- 17: Wärmeleitplatte
- 18: Schweißzusatz
- 19: Laserschweißnaht
- 20: Vertiefung
- 21: Bimetallscheibe
- 22: Stift
- 23: Kontaktfeder
- 24: Wandung
- 25: Ausnehmung
- 26: Vorsprung

## Patentansprüche

1. Thermisch leitender, plattenförmiger Träger (2) verbindbar mit dem Gehäuse (16) oder Sockel einer thermischen Schalteinrichtung, der in Wärmekontakt mit einer Heizeinrichtung (15) eines Gebrauchsgegenstands bringbar ist, wobei
der Träger (2) vier Eckbereiche ausweist und mit der in Wärmekontakt stehenden Heizeinrichtung (15) des Gebrauchsgegenstands mittels Laserschweißung verbindbar ist, wobei der Träger (2) jeweils einen Befestigungsarm (7) in jedem Eckbereich des Trägers (2) umfasst, der dazu hergerichtet ist, an einer außenseitigen Ausnehmung des Gehäuses (16) anzugreifen, um beide Teile miteinander in Position zu halten und
der Träger (2) an seiner Unterseite eben ausgebildet ist und einen speziell für die Einkopplung eines Laserstrahls (10) präparierten Bereich (8) aufweist, derart, dass der Bereich (8) eine den Querschnitt zur Unterseite des Trägers (2) hin verjüngende Konturierung in Form einer Kantenabschrägung (12) umfasst.

2. Träger nach Anspruch 1, **dadurch gekennzeichnet, dass** der Bereich (8) eine Strukturierung der Oberfläche des Trägers (2) umfasst.

3. Träger nach Anspruch 1 oder 2, **dadurch gekennzeichnet, dass** sich die verjüngende Konturierung und/oder Strukturierung an der Oberfläche an einer Befestigungslasche (5, 6) des Trägers (2) befindet und die Unterseite der Befestigungslasche (5, 6) eben ausgebildet ist.

4. Träger nach mindestens einem der vorhergehenden Ansprüche, **dadurch gekennzeichnet, dass** es sich bei dem Bereich (8) um einen äußeren Randbereich des Trägers (2) oder um einen Randbereich eines im Träger (2) vorgesehenen Durchbruchs (11) handelt.

5. Träger nach mindestens einem der vorhergehenden Ansprüche, **dadurch gekennzeichnet, dass** als Strukturierung der Oberfläche des Trägers (2) eine Oberflächenprofilierung (14) vorgesehen ist.

6. Träger nach Anspruch 5, **dadurch gekennzeichnet, dass** als Oberflächenprofilierung (14) eine Oberflächenstruktur bestehend aus einer Vielzahl von Rillen, Noppen, Pyramiden, Zacken, Vertiefungen, Wellen usw. vorgesehen ist.

7. Träger nach mindestens einem der vorhergehenden Ansprüche, **dadurch gekennzeichnet, dass** der Träger (2) aus Aluminium oder einer Aluminiumlegierung besteht.

8. Träger nach mindestens einem der vorhergehenden Ansprüche, **dadurch gekennzeichnet, dass** am Träger (2) ein Schweißzusatz (18) untergebracht ist.

9. Träger nach Anspruch 8, **dadurch gekennzeichnet, dass** der Schweißzusatz (18) in einer Einbuchtung (19) am Träger (2) untergebracht und/oder am oder auf den Träger (2) aufgepresst ist.

10. Träger nach Anspruch 8 oder 9, **dadurch gekennzeichnet, dass** der Schweißzusatz (18) sich an der oder zumindest im Bereich der Kante oder des Bereichs (8) des Trägers (2) befindet.

11. Träger nach mindestens einem der Ansprüche 8 bis 10, **dadurch gekennzeichnet, dass** der Schweißzusatz (18) drahtförmig oder schichtförmig ist.

12. Träger nach mindestens einem der Ansprüche 8 bis 11, **dadurch gekennzeichnet, dass** der Schweißzusatz (18) an der Stirnseite der Kante des Trägers (2) positioniert ist.

13. Thermisch leitender, plattenförmiger Träger (2) verbindbar mit dem Gehäuse oder Sockel einer thermischen Schalteinrichtung, der in Wärmekontakt mit einer Heizeinrichtung (15) eines Gebrauchsgegenstands bringbar ist, wobei
der Träger (2) mit der in Wärmekontakt stehenden Heizeinrichtung (15) des Gebrauchsgegenstands mittels Laserschweißung verbindbar ist, wobei der Träger (2) an seiner Unterseite eben ausgebildet ist und einen speziell für die Einkopplung eines Laserstrahls (10) präparierten Bereich (8) aufweist, derart, dass der Bereich (8) eine den Querschnitt zur Unterseite des Trägers (2) hin verjüngende Konturierung in Form einer Kantenabschrägung (12) umfasst,
der Träger (2) rund topfförmig ausgestaltet ist, eine umfänglich emporstehende Wandung (24) aufweist und
die Kantenabschrägung (12) vollumfänglich oder an umfänglichen Teilsegmenten vorgesehen ist.

14. Anordnung umfassend einen Träger (2) nach einem der vorhergehenden Ansprüche verbindbar mit dem Gehäuse oder Sockel einer thermischen Schalteinrichtung sowie eine Heizeinrichtung (15) eines Gebrauchsgegenstands, wobei der Träger (2) an der Heizeinrichtung (15) mit einer Laserschweißverbindung in Form einer Schweißnaht (19) befestigt ist, **dadurch gekennzeichnet, dass**
der Träger (2) plan auf der Außenseite einer Wand (17) der Heizeinrichtung (15) aufliegt und
in der Schweißnaht (19) ein Aufschmelzbereich sowohl im Bereich der Kantenabschrägung (12) als auch in der Wand (17) der Heizeinrichtung (15) vorliegt.

## Claims

1. Thermally conductive, plate-like support (2) which can be connected to the housing (16) or base of a thermal switching device that can be brought into thermal contact with a heating device (15) of an object of use, wherein
the support (2) has four corner regions and can be connected by means of laser welding to the heating device (15) that is in thermal contact of the object of use, wherein
the support (2) has a fixing arm (7) in each corner region of the support (2), which is configured to act on a recess on the outer side of the housing (16) in order to hold the two parts in position with each other, and
the support (2) is flat on its underside and has a region (8) specifically prepared to couple in a laser beam (10), in such a way that the region (8) comprises a contouring in the form of an edge bevel (12) that tapers the cross section towards the underside of the support (2).

2. Support according to Claim 1, **characterized in that** the region (8) comprises structuring of the surface of the support (2).

3. Support according to Claim 1 or 2, **characterized in that** the tapering contouring and/or structuring on the surface is located on a fixing tab (5, 6) of the support (2), and the underside of the fixing tab (5, 6) is flat.

4. Support according to at least one of the preceding claims, **characterized in that** the region (8) is an outer edge region of the support (2) or an edge region of an aperture (11) provided in the support (2) .

5. Support according to at least one of the preceding claims, **characterized in that** surface profiling (14) is provided as the structuring of the surface of the support (2).

6. Support according to Claim 5, **characterized in that** a surface structure consisting of a multiplicity of grooves, nubs, pyramids, serrations, depressions, waves and so on is provided as surface profiling (14).

7. Support according to at least one of the preceding claims, **characterized in that** the support (2) consists of aluminium or an aluminium alloy.

8. Support according to at least one of the preceding claims, **characterized in that** a welding filler (16) is accommodated on the support (2).

9. Support according to Claim 8, **characterized in that** the welding filler (18) is accommodated in an indentation (19) on the support (2) and/or is pressed on or onto the support (2).

10. Support according to Claim 8 or 9, **characterized in that** the welding filler (18) is located on or at least in the region of the edge or the region (8) of the support (2).

11. Support according to at least one of Claims 8 to 10, **characterized in that** the welding filler (18) is wire-like or layer-like.

12. Support according to at least one of Claims 8 to 11, **characterized in that** the welding filler (18) is positioned on the front side of the edge of the support (2).

13. Thermally conductive, plate-like support (2) which can be connected to the housing or base of a thermal switching device that can be brought into thermal contact with a heating device (15) of an object of use, wherein
the support (2) can be connected by means of laser welding to the heating device (15) that is in thermal contact with the object of use, wherein
the support (2) is flat on its underside and has a region (8) specifically prepared to couple in a laser beam (10), in such a way that the region (8) comprises a contour of the cross section in the form of an edge bevel (12) that tapers towards the underside of the support (2),
the support (2) is configured to be round in the form of a cup, has a circumferentially upstanding wall (24) and
the edge bevel (12) is provided over the full circumference or on partial circumferential segments.

14. Arrangement comprising a support (2) according to one of the preceding claims which can be connected to the housing or base of a thermal switching device and a heating device (15) of an object of use, the support (2) being fixed to the heating device (15) by a laser welded joint in the form of a weld (19),
**characterized in that**
the support (2) rests flat on the outer side of a wall (17) of the heating device (15) and
in the weld (19) there is a melting region both in the region of the edge bevel (12) and in the wall (17) of the heating device (15).

## Revendications

1. Support (2) thermoconducteur en forme de plaque pouvant être relié au boîtier (16) ou au socle d'un dispositif de commutation thermique, lequel support peut être amené en contact thermique avec un dispositif de chauffage (15) d'un objet utilitaire, dans lequel
le support (2) comprend quatre zones de coin et peut être relié par soudage au laser au dispositif de chauffage (15), en contact thermique, de l'objet utilitaire, dans lequel
le support (2) comporte respectivement un bras de fixation (7) dans chaque zone de coin du support (2), lequel bras de fixation est agencé pour venir en prise avec un évidement sur le côté extérieur du boîtier (16), afin de maintenir les deux parties en position l'une avec l'autre et
le support (2) est réalisé de manière plane sur son côté inférieur et comprend une zone (8) préparée spécialement pour l'injection d'un faisceau laser (10), de telle sorte que la zone (8) présente une forme de contour rétrécissant la section transversale vers le côté inférieur du support (2) et se présentant sous la forme d'un biseautage d'arête (12).

2. Support selon la revendication 1, **caractérisé en ce que** la zone (8) comporte une structuration de la surface du support (2).

3. Support selon la revendication 1 au 2, **caractérisé en ce que** la forme de contour dégressive et/ou la structuration sur la surface se trouvent sur une patte de fixation (5, 6) du support (2) et le côté intérieur de la patte de fixation (5, 6) est réalisé de manière plane.

4. Support selon au moins l'une des revendications précédentes, **caractérisé en ce que** la zone (8) est une zone de bord extérieure du support (2) ou une zone de bord d'un passage (11) prévu dans le support (2).

5. Support selon au moins l'une des revendications précédentes, **caractérisé en ce qu'**il est prévu un profilage de surface (14) en tant que structuration de la surface du support (2).

6. Support selon la revendication 5, **caractérisé en ce qu'**il est prévu comme profilage de surface (14) une structure de surface composée d'une multiplicité de sillons, de bosses, de pyramides, de dents, de creux, d'ondes, etc.

7. Support selon au moins l'une des revendications précédentes, **caractérisé en ce que** le support (2) se compose d'aluminium ou d'un alliage d'aluminium.

8. Support selon au moins l'une des revendications précédentes, **caractérisé en ce qu'**un apport de soudage (18) est installé sur le support (2).

9. Support selon la revendication 8, **caractérisé en ce que** l'apport de soudage (18) est installé dans un renflement (19) sur le support (2) et/ou est pressé dans ou sur le support (2).

10. Support selon la revendication 8 ou 9, **caractérisé en ce que** l'apport de soudage (18) se trouve sur ou au moins dans la région de l'arête ou de la zone (8) du support (2).

11. Support selon au moins l'une des revendications 8 à 10, **caractérisé en ce que** l'apport de soudage (18) se présente sous forme de fil ou sous forme de couche.

12. Support selon au moins l'une des revendications 8 à 11, **caractérisé en ce que** l'apport de soudage (18) est positionné sur le côté frontal de l'arête du support (2).

13. Support (2) thermoconducteur en forme de plaque pouvant être relié au boîtier ou au socle d'un dispositif de commutation thermique, lequel support peut être amené en contact thermique avec un dispositif de chauffage (15) d'un objet utilitaire, dans lequel
le support (2) peut être relié par soudage au laser au dispositif de chauffage (15), en contact thermique, de l'objet utilitaire, dans lequel
le support (2) est réalisé de manière plane sur son côté inférieur et comprend une zone (8) préparée spécialement pour l'injection d'un faisceau laser (10), de telle sorte que la zone (8) présente une forme de contour rétrécissant la section transversale vers le côté inférieur du support (2) et se présentant sous la forme d'un biseautage d'arête (12),
le support (2) est configuré en forme de pot de manière ronde et comprend une paroi (24) dressée vers le haut sur la périphérie et
le biseautage d'arête (12) est prévu sur toute la périphérie ou sur des segments partiels périphériques.

14. Ensemble comportant un support (2) selon l'une des revendications précédentes pouvant être relié au boîtier ou au socle d'un dispositif de commutation thermique ainsi qu'un dispositif de chauffage (15) d'un objet utilitaire, dans lequel le support (2) est fixé au dispositif de chauffage (15) à l'aide d'une liaison par soudage au laser sous la forme d'un joint de soudure (19), **caractérisé en ce que**
le support (2) repose à plat sur le côté extérieur d'une paroi (17) du dispositif de chauffage (15) et,
dans le joint de soudure (19), une zone de fusion est présente à la fois dans la région du biseautage d'arête (12) et dans la paroi (17) du dispositif de chauffage (15).
